# EUROPÄISCHE PATENTSCHRIFT

(11) **EP 1 687 594 B1**
(45) Veröffentlichungstag und Bekanntmachung des Hinweises auf die Patenterteilung: **20.01.2016**
(21) Anmeldenummer: 04819261.1
(22) Anmeldetag: 26.11.2004
(51) Int. Cl.: G01F 1/66, B06B 1/06, G10K 9/122

(54) **ULTRASCHALL-DURCHFLUSSMESSVORRICHTUNG**
ULTRASOUND FLOW METER
DEBITMETRE À ULTRASONS

(30) Priorität: 27.11.2003 DE 10356114
(43) Veröffentlichungstag der Anmeldung: 09.08.2006
(73) Patentinhaber: Endress + Hauser Flowtec AG, 4153 Reinach/BL (CH)
(72) Erfinder: RIEDER, Alfred, 84032 Landshut (DE); WIEST, Achim, 79576 Weil am Rhein (DE); STRUNZ, Torsten, CH-4056 Basel (CH); BEZDEK, Michal, State College, PA16801 (US)
(74) Vertreter: Andres, Angelika Maria
(86) Internationale Anmeldenummer: PCT/EP2004/053121
(87) Internationale Veröffentlichungsnummer: WO 2005/052519

(56) Entgegenhaltungen:
- EP-A- 0 477 575
- EP-A- 0 749 005
- EP-A- 1 315 144

## Beschreibung

Die Erfindung betrifft eine Vorrichtung zur Bestimmung und/oder Überwachung des Volumen- und/ oder Massendurchflusses eines Messmediums, das eine Rohrleitung in einer Strömungsrichtung durchfließt, mit zumindest einem Ultraschallsensor der Ultraschall-Messsignale in die Rohrleitung aussendet und empfängt, und mit einer Regel-/Auswerteeinheit, die den Volumen- und/oder den Massendurchfluss des Messmediums in der Rohrleitung anhand der Laufzeitdifferenz der Ultraschall-Messsignale in Strömungsrichtung und entgegen der Strömungsrichtung oder anhand der Dopplerverschiebung der Ultraschall-Messsignale ermittelt.

Ultraschall-Durchflussmessgeräte werden vielfach in der Prozess- und Automatisierungstechnik eingesetzt. Sie erlauben es, den Volumen- und/oder Massenstrom eines Mediums in einer Rohrleitung berührungslos zu bestimmen.

Die bekannten Ultraschall-Durchflussmessgeräte arbeiten entweder nach dem Doppler-Prinzip oder nach dem Laufzeitdifferenz-Prinzip. Beim Laufzeit-Differenz-Prinzip wird die unterschiedliche Laufzeit von Ultraschall-Mess-signalen in Strömungsrichtung und entgegen der Strömungsrichtung des Mediums ausgewertet. Hierzu werden die Ultraschall-Messsignale von den Ultraschallsensoren wechselweise in Strömungsrichtung und entgegen der Strömungsrichtung des Mediums ausgesendet bzw. empfangen. Aus der Laufzeitdifferenz der Ultraschall-Messsignale lässt sich die Fließgeschwindig-keit und damit bei bekanntem Durchmesser der Rohrleitung der Volumen-durchfluss bzw. bei bekannter oder gemessener Dichte des Mediums der Massendurchfluss bestimmen. Die EP 1 315 144 A2 zeigt beispielhaft einen einfach zu fertigenden Ultraschallwandler eines Ultraschall-Durchflussmessgeräts.

Beim Doppler-Prinzip werden Ultraschall-Messsignale mit einer vorgegebenen Frequenz in das strömende Medium eingekoppelt. Die in dem Medium reflektierten Ultraschall-Messsignale werden ausgewertet. Anhand einer zwischen dem eingekoppelten und dem reflektierten Ultraschall-Messsignal auftretenden Frequenzverschiebung lässt sich ebenfalls die Fließge-schwindigkeit des Mediums bzw. der Volumen und/oder Massenstrom bestimmen.

Der Einsatz von Durchflussmessgeräten, die nach dem Doppler-Prinzip arbeiten, ist nur möglich, wenn in dem Medium Luftbläschen oder Verunreinigungen vorhanden sind, an denen die Ultraschall-Messsignale reflektiert werden. Damit ist der Einsatz derartiger Ultraschall-Durchflussmess-geräte im Vergleich zu den Ultraschall-Durchflussmessgeräten, die nach dem Laufzeit-Differenz-Prinzip arbeiten, ziemlich eingeschränkt.

Hinsichtlich der Typen von Messgeräten wird unterschieden zwischen Ultraschall-Durchflussmessaufnehmem, die in die Rohrleitung eingesetzt werden, und Clamp-On Durchflussmessgeräten, bei denen die Ultraschall-sensoren von außen an die Rohrleitung mittels eines Spannverschlusses angepresst werden. Clamp-On Durchflussmessgeräte sind beispielsweise in der EP 0 686 255 B1, der US-PS 4,484,478 oder der US-PS 4,598,593 beschrieben.

Bei beiden Typen von Ultraschall-Durchflussmessgeräten werden die Ultraschall-Messsignale unter einem vorgegebenen Winkel in die Rohrleitung bzw. in das Messrohr, in der/ in dem sich das strömende Medium befindet, eingestrahlt und/oder empfangen. Um eine optimale Impedanzanpassung zu erreichen, werden die Ultraschall-Messsignale über einen Vorlaufkörper bzw. einen Koppelkeil in die Rohrleitung eingekoppelt bzw. aus der Rohrleitung ausgekoppelt. Hauptbestandteil eines Ultraschallsensors ist zumindest ein piezoelektrisches Element, welches die Ultraschall-Messsignale erzeugt und/oder empfängt. Um das piezoelektrische Element von seiner Umgebung elektrisch zu isolieren, schlägt die EP 0 749 005 A2 einen elektrisch isolierenden Vorlaufkörper vor.

Nun erzeugt ein Ultraschallsensor neben dem eigentlichen Nutzsignal, das der Bestimmung des Volumen- und/oder Massenstroms dient, auch einen sog. Kö rperschall, d.h. ein gewisser Anteil der Ultraschall-Messignale breitet sich über die Wandung der Rohrleitung aus und überlagert sich als Störsignal dem eigentlichen Durchflussmesssignal. Als Gegenmaßnahme wurde bislang der Schallweg durch die Rohrleitung bzw. durch das Messmedium möglichst so lang gewählt, dass sich die Laufzeit des das Medium querenden Messsignals deutlich von der Laufzeit des Signals, das sich über die Wandung der Rohrleitung ausbreitet, unterscheidet. Probleme treten jedoch spätestens dann auf, wenn es sich um eine Rohrleitung mit einer kleinen Nennweite handelt. In diesem Fall lassen sich Messfehler kaum noch vermeiden. Daher wäre es sehr vorteilhaft, diese Störsignale, die sich über die Rohrwand ausbreiten, bereits an der Quelle, wo sie entstehen, zu vermeiden und nicht erst nachträglich aus den gemessenen Signalen herauszufiltern bzw. zu eliminieren. Beispielsweise schlägt die EP 0 477 575 A1 Sicken zur Körperschallentkopplung vor.

Der Erfindung liegt die Aufgabe zugrunde, ein Ultraschall-Durchfluss-messgerät vorzuschlagen, bei dem der Anteil der Ultraschall-Messsignale, der sich über die Wandung der Rohrleitung ausbreitet, minimiert ist.

Die Aufgabe wird dadurch gelöst, dass der Ultraschallsensor topfförmig ausgebildet ist und ein Gehäuse und eine schwingfähige Einheit zur Erzeugung der Ultraschallsignale aufweist, dass die schwingfähige Einheit aus mehreren Komponenten besteht, dass die schwingfähige Einheit so ausgestaltet ist, dass sie eine Knotenebene aufweist, die im wesentlichen senkrecht zur Abstrahl- bzw. Empfangsrichtung der Ultraschall-Messsignale angeordnet ist, und dass zumindest ein Teilbereich der Außenflä che der schwingfähigen Einheit im Bereich der Knotenebene der schwingfähigen Einheit mit dem Gehäuse verbunden ist. Die Knotenebene ist dadurch definiert, dass hier die in Einstrahl- bzw. Abstrahlrichtung ein- und auslaufenden Messsignale destruktiv miteinander interferieren. Durch die erfindungsgemäße Konstruktion des Ultraschallsensors wird ein hoher Entkopplungsgrad der schwingfähigen Einheit vom Gehäuse erreicht.

Da erfindungsgemäß zumindest ein Teilbereich der Außenfläche der schwingfä higen Einheit im Bereich der Knotenebene der schwingfähigen Einheit mit dem Gehä use verbunden ist, wird somit die über das Gehäuse des Ultraschallsensors in die Wandung der Rohrleitung eingeleitete Energie minimiert. Natürlich wird durch die erfindungsgemäße Ausgestaltung auch sichergestellt, dass keine Schallwellen aus der Umgebung des Ultraschall-Durchflussmessgeräts in den Ultraschallsensor hineinü bertragen werden. Sie ermöglicht also auch die Störgrößenunterdrückung von außen. Schlagwort-artig lässt sich der erfindungsgemäße Ultraschallsensor als 'ausbalancierter Ultraschallsensor' oder als 'ausbalancierte Sensortasse' beschreiben.

Erfindungsgemäß handelt es sich bei der Knotenebene um eine Symmetrieebene der schwingfähigen Einheit; die schwingfähige Einheit ist also bezüglich der Knotenebene symmetrisch aufgebaut. Weiterhin ist eine ringförmige Membran im Bereich der Knotenebene bzw. der Symmetrieebene der schwingfähigen Einheit vorgesehen, über die die schwingfä hige Einheit mit dem Gehäuse verbunden ist. Wie bereits gesagt, lässt sich durch diese Ausgestaltung eine ausgezeichnete Schallentkopplung zwischen der schwingfähigen Einheit des Ultraschallsensors und der Umgebung erzielen. Darüber hinaus isoliert die Membran den Innenraum des Gehäuses om Prozess; sie dient also dem Schutz des Ultraschallsensors gegen Verschmutzungen aus der Umgebung bzw. aus dem Prozess.

Gemäß einer bevorzugten Ausgestaltung der erfindungsgemäßen Vorrichtung weist die schwingfähige Einheit zumindest ein scheibenförmiges piezo-elektrisches Element, ein Deckelelement und ein Bodenelement auf, wobei das piezoelektrische Element bzw. die piezoelektrischen Elemente symmetrisch zu der Symmetrieebene angeordnet ist bzw. sind, und wobei das Deckelelement und das Bodenelement symmetrisch zu beiden Seiten des piezoelektrischen Elements bzw. der piezoelektrischen Elemente angeordnet sind.

Insbesondere hat im Falle der Verwendung eines piezoelektrischen Elements das piezoelektrische Element eine erste und eine zweite Begrenzungsfläche, wobei an der ersten Begrenzungsfläche das Bodenelement und wobei an zu der zweiten Begrenzungsfläche das Deckelelement angeordnet ist.

Weiterhin schlägt eine vorteilhafte Ausgestaltung der erfindungsgemäßen Vorrichtung in einem vorgegebenen Bereich der beiden Begrenzungsflächen des piezoelektrischen Elements Elektroden vor, über die das piezoelektrische Element bzw. die schwingfähige Einheit zu Schwingungen angeregt wird.

Zusätzlich ist zwischen der Elektrode an der ersten Begrenzungsfläche und dem Bodenelement und der Elektrode an der zweiten Begrenzungsfläche und dem Deckelelement jeweils eine dielektrische Isolierschicht vorgesehen. Beispielsweise ist die dielektrische Isolierschicht aus Keramik gefertigt.

Gemäß einer vorteilhaften Weiterbildung der erfindungsgemäßen Vorrichtung ist in einem Randbereich der schwingfähigen Einheit eine ringförmige Ausnehmung vorgesehen. Bevorzugt ist die Ausnehmung luftgefüllt. Prinzipiell erfüllt die Ausnehmung zwei Aufgaben: Einerseits ist sie dienlich bei der Fertigung des erfindungsgemäßen Ultraschallsensors; andererseits schafft sie beim Einsatz des Ultraschallsensors Platz für ein gewisses Spiel und ermöglicht es so, eventuell auftretende radiale Schwingungen der schwing-fähigen Einheit auszugleichen.

Eine bevorzugte Weiterbildung der erfindungsgemäßen Vorrichtung sieht in einem Gehäuseraum, der sich oberhalb des Deckelelements befindet, eine Vergussmasse vor. Beispielsweise handelt es sich bei der Vergussmasse um einen Silikonverguss.

Als eine sehr interessante Ausgestaltung der erfindungsgemäßen Vorrichtung wird angesehen, dass die schwingfähige Einheit so ausgestaltet ist, dass sie an unterschiedliche Messmedien adaptierbar ist. Prinzipiell lässt sich diese Ausgestaltung auf unterschiedlichen Wegen realisieren. Gemäß einer Alternative ist das Deckelelement austauschbar, wobei Deckelelemente unterschiedlicher Dicke und/oder unterschiedlicher Dichte vorgesehen sind, die in Abhängigkeit von dem jeweiligen Messmedium auswählbar sind.

Eine weitere Alternative sieht vor, dass Füllmedien unterschiedlicher Dichte verwendet werden, die in dem Gehäuseraum oberhalb des Deckelelements in Abhä ngigkeit vo dem jeweiligen Messmedium anordenbar sind. Mittels der zuvor beschriebenen Ausgestaltungen ist es möglich, den Einfluss des Messmediums auf die ' ausbalancierte Sensortasse' zu berücksichtigen und zu kompensieren. Es versteht sich, dass in diesen Fällen die Knotenebene sehr wohl von der Lage der Symmetrieebene der schwingfähigen Einheit abweichen kann.

Die Erfindung wird anhand der nachfolgenden Zeichnungen näher erläutert. Es zeigt:
Fig. 1: eine schematische Darstellung einer Ausgestaltung
   eines Ultraschall-Durchflussmessgeräts, bei dem der
   erfindungsgemäße Ultraschallsensor eingesetzt ist;
Fig. 2: eine perspektivische Teilansicht des erfindungs-gemäßen Ultraschallsensors; und
Fig. 3: eine Draufsicht auf den in Fig. 2 gezeigten Ultraschall-sensor gemäß der Kennzeichnung A.

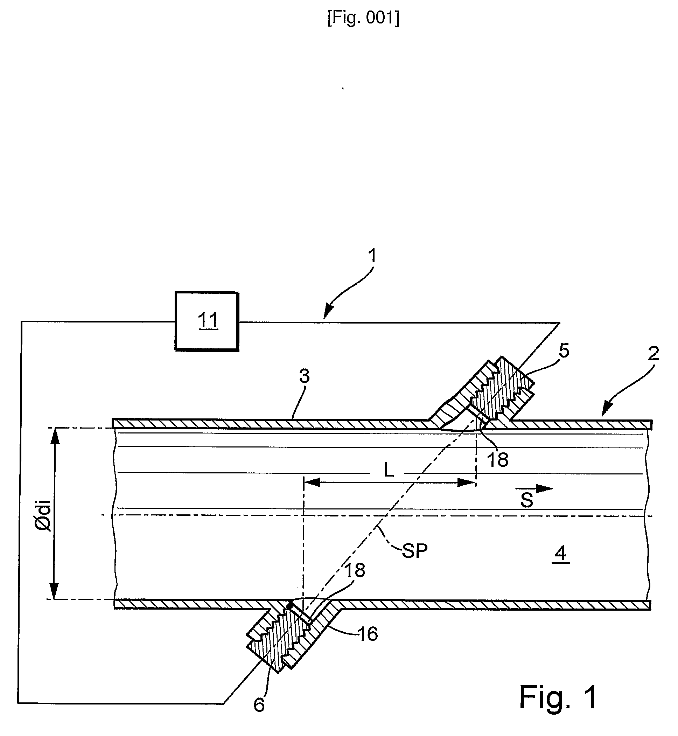

Fig. 1 zeigt eine schematische Darstellung eines Inline-Ultraschall-Durchfluss-messgeräts 1, bei dem der erfindungsgemäße Ultraschallsensor 5; 6 zum Einsatz kommt. Im gezeigten Fall ermittelt das Ultraschall-Durchflussmess-gerä t1 den Volumendurchfluss bzw. den Massendurchfluss des Mess-mediums 4 nach der bekannten Laufzeitdifferenz-Methode.

Wesentliche Komponenten des Inline Ultraschall-Durchflussmesserätes 1 sind die beiden Ultraschallsensoren 5, 6 und die Regel-/Auswerteeinheit 11. Die beiden Ultraschallsensoren 5, 6 sind mittels einer in der Fig. 1 nicht gesondert dargestellten Befestigungsvorrichtung in einem Abstand L voneinander an dem Rohr 2 angebracht. Entsprechende Befestigungsvorrichtungen sind aus dem Stand der Technik hinlänglich bekannt und werden auch von der Anmelderin angeboten und vertrieben. Die Rohrleitung 2 hat einen vorge-gebenen Innendurchmesser di wird von dem Medium 4 in Strömungsrichtung S durchströmt.

Ein Ultraschallsensor 5; 6 weist als wesentlichen Bestandteil zumindest ein piezoelektrisches Element 9; 10 bzw. eine schwingfähige Einheit 16, auf die die Ultraschall-Messsignale erzeugt und/oder empfängt. Die Ultraschall-Messsignale werden jeweils ü ber die Bodenelemente 18 der beiden Ultraschallsensoren 5; 6 in die vom Medium 4 durchströmte Rohrleitung 2 eingekoppelt bzw. aus der vom Medium durchströmten Rohrleitung 2 ausgekoppelt. Ein Bodenelement 18 ist in bekannter Weise so ausgestaltet, dass sich eine möglichst gute Impedanzanpassung beim Übergang von einem Medium in das andere realisieren lässt. Mit SP ist übrigens der Schallpfad gekennzeichnet, auf dem sich die Ultraschall-Messsignale in der Rohrleitung 2 bzw. in dem Medium 4 ausbreiten. Im gezeigten Fall handelt es sich um eine sog. Ein-Traversenanordnung der Ultraschallsensoren 5, 6. Eine Traverse kennzeichnet dabei den Teilbereich des Schallpfades SP, auf dem ein Ultraschall-Messsignal die Rohrleitung 2 einmal quert. Die Traversen können je nach Anordnung der Ultraschallsensoren 5, 6 und ggf. unter Einfügen eines Reflektorelements in den Schallpfad SP diametral oder chordial verlaufen.

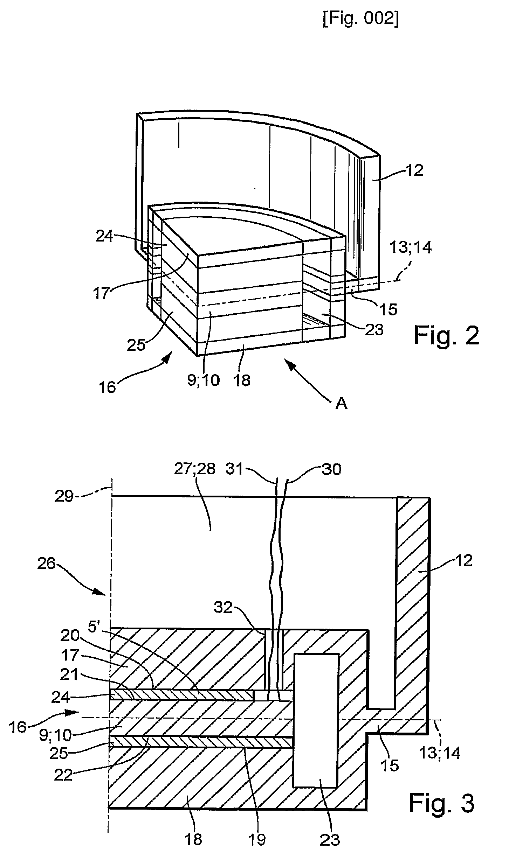

Fig. 2 zeigt eine perspektivische Teilansicht des erfindungsgemäßen Ultraschallsensors 5; 6. In Fig. 3 ist eine Draufsicht auf den in Fig. 2 gezeigten Ultraschallsensor 5; 6 gemäß der Kennzeichnung A zu sehen. Der Ultra-schallsensor 5; 6 zeigt bezüglich der Symmetrieachse 29 einen bis auf die Bohrung für die elektrische Verbindungsleitungen 32 rotationssymmetrischen Aufbau. Wesentliche Komponenten des erfindungsgemäßen Ultraschall-sensors 5; 6 sind das Gehäuse 12 und die schwingf ähige Einheit 16. Die schwingfähige Einheit 16 so ausgestaltet, dass sie eine Knotenebene 13 aufweist, die im wesentlichen senkrecht zur Abstrahl- bzw. Empfangs-Richtung der Ultraschall-Messsignale angeordnet ist. Zumindest ein Teilbereich der Außenfläche der schwingfähigen Einheit 16 ist im Bereich der Knotenebene 13 der schwingfähigen Einheit 16 mit dem Gehäuse 12 verbunden ist. Die Knotenebene 13 ist dadurch definiert, dass hier die in Abstrahl- bzw. Einstrahlrichtung ein- und auslaufenden Messsignale destruktiv miteinander interferieren. Die Verbindung zwischen der schwingfähigen Einheit 16 und dem Gehäuse 12 erfolgt über die Membran 15. Durch die erfindungsgemäße Konstruktion des Ultraschallsensors 5; 6 wird die schwingfähige Einheit 16 - wie bereits an vorhergehender Stelle erläutert - von dem Gehäuse 12 weitgehend entkoppelt. Hierdurch lässt sich die über das Gehäuse des Ultraschallsensors 5; 6 in die Wandung 3 der Rohrleitung 2 eingeleitete Energie minimieren. Zudem wird verhindert, das Schallenergie von außen in die schwingfähige Einheit hineingeleitet wird.

Kernstücke der schwingfähigen Einheit 16 sind das scheibenförmige piezoelektrische Element 9; 10, das Deckelelement 17 und das Bodenelement 18 auf. Das piezoelektrische Element 9; 10 ist symmetrisch zu der Symmetrie-ebene 14 angeordnet. Das Deckelelement 17 und das Bodenelement 18 sind symmetrisch zu beiden Seiten des piezoelektrischen Elements 9; 10 angebracht.

Das piezoelektrische Element hat eine erste Begrenzungsfläche 19 und eine zweite Begrenzungsfläche 20, wobei an der ersten Begrenzungsfläche 19 das Bodenelement 18 und wobei an zu der zweiten Begrenzungsfläche 20 das Deckelelement 17 angeordnet ist.

In einem vorgegebenen Bereich der beiden Begrenzungsflächen 19, 20 des piezoelektrischen Elements 9; 10 sind Elektroden 21, 22 aufgebracht, über die das piezoelektrische Element 9; 10 zu Schwingungen angeregt wird. Zusätz-lich ist zwischen der Elektrode 22 an der ersten Begrenzungsfläche 19 und dem Bodenelement 18 und der Elektrode 21 an der zweiten Begrenzungs-fläche 20 und dem Deckelelement 17 jeweils eine dielektrische Isolierschicht 24, 25 vorgesehen. Beispielsweise ist die dielektrische 24, 25 Isolierschicht aus Keramik gefertigt.

Der Gehäuseraum 26 oberhalb des Deckelelements 17 ist mit einer Verguss-masse 27 ausgefüllt. Insbesondere handelt es sich bei der Vergussmasse 27 um einen Silikonverguss.

Eine optimale Anpassung des erfindungsgemäßen Ultraschallsensors 5; 6 an unterschiedliche Messmedien 4 lässt sich durch geringfügige Abänderungen der schwingfä higen Einheit 16 erreichen. Prinzipiell stehen hier unterschied-liche Wege offen. Gemä ß einer Alternative ist das Deckelelement 17 austauschbar, wobei Deckelelemente 17 unterschiedlicher Dicke und/oder unterschiedlicher Dichte vorgesehen sind, die in Abh ängigkeit von dem jeweiligen Messmedium 4 auswählbar sind. Eine weitere Alternative sieht vor, dass Füllmedien 28 unterschiedlicher Dichte verwendet werden, die in dem Gehäuseraum 26 oberhalb des Deckelelements 17 in Abhängigkeit von dem jeweiligen Messmedium 4 anordenbar sind. Mittels der zuvor beschriebenen Ausgestaltungen ist es möglich, den Einfluss des Messmediums 4 auf die 'ausbalancierte' Sensortasse zu berücksichtigen und zu kompensieren. Es versteht sich, dass in diesen F ällen die Knotenebene 13 durchaus von der Lage der Symmetrieebene 14 der schwingf ähigen Einheit 16 abweichen kann.

## Patentansprüche

1. Vorrichtung zur Bestimmung und/oder Überwachung des Volumen- und/ oder Massendurchflusses eines Messmediums (4), das eine Rohrleitung (2) in einer Strömungsrichtung (S) durchfließt, mit zumindest einem Ultraschallsensor (5; 6) der Ultraschall-Messsignale in die Rohrleitung (2) aussendet und empfängt, und mit einer Regel-/Auswerteeinheit (11), die den Volumen- und/oder den Massendurchfluss des Messmediums (4) in der Rohrleitung (2) anhand der Laufzeitdifferenz der Ultraschall-Messsignale in Strömungsrichtung (S) und entgegen der Strömungsrichtung (S) oder anhand der Dopplerverschiebung der Ultraschall-Messsignale ermittelt, wobei der Ultraschallsensor (5; 6) topfförmig ausgebildet ist und ein Gehäuse (12) und eine schwingfähige Einheit (16) zur Erzeugung der Ultraschallsignale aufweist und die schwingfähige Einheit (16) aus mehreren Komponenten (9; 10, 17, 18) besteht,
**dadurch gekennzeichnet,**
**dass** die schwingfähige Einheit (16) so ausgestaltet ist, dass sie eine Symmetrieebene (14) aufweist, die im wesentlichen senkrecht zur Abstrahl- bzw. Empfangsrichtung der Ultraschall-Messsignale angeordnet ist und bezüglich derer die schwingfähige Einheit (16) symmetrisch aufgebaut ist, und dass zumindest ein Teilbereich der Außenfläche (14) der schwingfähigen Einheit im Bereich der Symmetrieebene (14) der schwingfähigen Einheit (16) mit dem Gehäuse (12) verbunden ist, wobei eine ringförmige Membran (15) im Bereich der Symmetrieebene (14) der schwingfähigen Einheit (16) vorgesehen ist, über die die schwingfähige Einheit (16) mit dem Gehäuse (12) verbunden ist.

2. Vorrichtung nach Anspruch 1,
**dadurch gekennzeichnet,**
**dass** die schwingfähige Einheit (16) zumindest ein scheibenförmiges piezoelektrisches Element (9; 10), ein Deckelelement (17) und ein Bodenelement (18) aufweist, dass das piezoelektrische Element/die piezoelektrischen Elemente (9; 10) symmetrisch zu der Symmetrieebene (14) angeordnet ist/sind, und
**dass** das Deckelelement (17) und das Bodenelement (18) symmetrisch zu beiden Seiten des piezoelektrischen Elements/der piezoelektrischen Elemente (9; 10) angeordnet sind.

3. Vorrichtung nach Anspruch 2,
**dadurch gekennzeichnet,**
**dass** das piezoelektrische Element (9; 10) eine erste Begrenzungsfläche (19) und eine zweite Begrenzungsfläche (20) aufweist,
**dass** parallel zu der ersten Begrenzungsfläche (19) das Bodenelement (15) vorgesehen ist und
**dass** parallel zu der zweiten Begrenzungsfläche (20) das Deckelelement (14) vorgesehen ist.

4. Vorrichtung nach Anspruch 3,
**dadurch gekennzeichnet,**
**dass** in einem vorgegebenen Bereich der beiden Begrenzungsflächen (19, 20) des piezoelektrischen Elements (9; 10) Elektroden (21, 22) vorgesehen sind, über die das piezoelektrische Element (9; 10) bzw. die schwingfähige Einheit (13; 9; 10) zu Schwingungen angeregt wird.

5. Vorrichtung nach Anspruch 2,
**dadurch gekennzeichnet,**
**dass** zwischen der Elektrode (21) an der ersten Begrenzungsfläche (19) und dem Bodenelement (18) und der Elektrode (22) an der zweiten Begrenzungs-fläche (20) und dem Deckelelement (17) jeweils eine dielektrische Isolier-schicht (24, 25) vorgesehen ist.

6. Vorrichtung nach einem der Ansprüche 2 bis 5,
**dadurch gekennzeichnet,**
**dass** in einem Randbereich der schwingfähigen (16) Einheit eine ringförmige Ausnehmung (23) vorgesehen ist, um eventuell auftretende radiale Schwingungen der schwingfähigen Einheit auszugleichen.

7. Vorrichtung nach Anspruch 2, 3 oder 5,
**dadurch gekennzeichnet,**
**dass** in einem Gehäuseraum (26), der sich oberhalb des Deckelelements (17) befindet, eine Vergussmasse (27) angeordnet ist.

8. Vorrichtung nach Anspruch 7,
**dadurch gekennzeichnet,**
**dass** es sich bei der Vergussmasse (27) um einen Silikonverguss handelt.

9. Vorrichtung nach Anspruch 1,
**dadurch gekennzeichnet,**
**dass** das Deckelelement (17) austauschbar ist, und
**dass** Deckelelemente (17) unterschiedlicher Dicke und/oder unterschiedlicher Dichte vorgesehen sind, die in Abhängigkeit von dem jeweiligen Messmedium (4) auswählbar und in die schwingfähige Einheit (16) integrierbar sind.

10. Vorrichtung nach Anspruch 1,
**dadurch gekennzeichnet,**
**dass** austauschbare Füllmedien (28) unterschiedlicher Dichte vorgesehen ist, die in dem Gehäuseraum (26) oberhalb des Deckelelements (17) in Abhängigkeit von dem jeweiligen Messmedium (4) anordenbar sind.

## Claims

1. Unit for determining and/or monitoring the volume flow and/or mass flow of a medium under measurement (4), which flows through a pipe (2) in a flow direction (S), with at least one ultrasonic sensor (5, 6) which emits and receives ultrasonic measuring signals in the pipe (2), and with a control/evaluation unit (11), which determines the volume flow and/or mass flow of the medium under measurement (4) in the pipe (2) using the time of flight difference of the ultrasonic measuring signals in the flow direction (S) and against the flow direction (S) or using the Doppler shift of the ultrasonic measuring signals,
wherein the ultrasonic sensor (5, 6) is designed in the shape of a pot and has a housing (12) and a unit capable of vibration (16) designed to generate the ultrasonic signals and wherein the unit capable of vibration (16) consists of several components (9, 10, 17, 18),
**characterized in that**
the unit capable of vibration (16) is designed in such a way that it has a symmetrical plane (14), which is essentially arranged perpendicular to the direction of emission or reception of the ultrasonic measuring signals, and in relation to which the unit capable of vibration (16) is arranged symmetrically, and **in that** at least a partial area of the outer surface (14) of the unit capable of vibration is connected to the housing (12) in the area of the symmetrical plane (14) of the unit capable of vibration (16), wherein an annular membrane (15) is provided in the area of the symmetrical plane (14) of the unit capable of vibration (16) via which the unit capable of vibration (16) is connected to the housing (12).

2. Unit as claimed in Claim 1,
**characterized in that**
the unit capable of vibration (16) has at least a disk-shaped piezoelectric element (9, 10), a cover element (17) and a base element (18),
**in that** the piezoelectric element / piezoelectric elements (9, 10) is/are symmetrically arranged in relation to the symmetrical plane (14), and
**in that** the cover element (17) and the base element (18) are symmetrically arranged in relation to the two sides of the piezoelectric element / piezoelectric elements (9, 10).

3. Unit as claimed in Claim 2,
**characterized in that**
the piezoelectric element (9, 10) has a first delimiting surface (19) and a second delimiting surface (20),
**in that** the base element (15) is provided in parallel to the first delimiting surface (19) and
**in that** the cover element (14) is provided in parallel to the second delimiting surface (20).

4. Unit as claimed in Claim 3,
**characterized in that**
electrodes (21, 22) are provided in a predefined area of the two delimiting surfaces (19, 20) of the piezoelectric element (9, 10), via said electrodes the piezoelectric element (9, 10) or the unit capable of vibration (13, 9, 10) are excited to vibrate.

5. Unit as claimed in Claim 2,
**characterized in that**
a dielectric insulation layer (24, 25) is provided in each case between the electrode (21) on the first delimiting surface (19) and the base element (18) and the electrode (22) on the second delimiting surface (20) and the cover element (17).

6. Unit as claimed in one of the Claims 2 to 5,
**characterized in that**
an annular cavity (23) is provided in a marginal area of the unit capable of vibration (16) to compensate for any radial vibrations of the unit capable of vibration.

7. Unit as claimed in one of the Claims 2, 3 or 5,
**characterized in that**
a potting compound (27) is arranged in a housing compartment (26), which is located above the cover element (17).

8. Unit as claimed in Claim 7,
**characterized in that**
the potting compound (27) is a silicone compound.

9. Unit as claimed in Claim 1,
**characterized in that**
the cover element (17) is exchangeable, and
**in that** cover elements (17) of different thickness and/or density are provided which can be selected depending on the particular medium under measurement (4) and can be integrated into the unit capable of vibration (16).

10. Unit as claimed in Claim 1,
**characterized in that**
that exchangeable fill media (28) of different density are provided which can be arranged in the housing compartment (26) above the cover element (17) depending on the particular medium under measurement (4).

## Revendications

1. Dispositif destiné à la détermination et/ou la surveillance du débit volumique et/ou massique d'un produit mesuré (4), qui circule dans une conduite (2) dans une direction d'écoulement (S), avec au moins un capteur à ultrasons (5, 6) qui émet et reçoit des signaux de mesure ultrasonores dans la conduite (2), et avec une unité de régulation / d'exploitation (11), qui détermine le débit volumique et/ou massique du produit mesuré (4) dans la conduite (2) sur la base de la différence du temps de propagation des signaux de mesure ultrasonores dans la direction d'écoulement (S) et dans la direction inverse d'écoulement (S) ou au moyen du décalage Doppler des signaux de mesure ultrasonores,
pour lequel le capteur à ultrasons (5, 6) est conçu en forme de pot et comporte un boîtier (12) et une unité apte à vibrer (16) destinée à la génération des signaux ultrasonores et
pour lequel l'unité apte à vibrer (16) est constituée de plusieurs composants (9, 10, 17, 18),
**caractérisé**
**en ce que** l'unité apte à vibrer (16) est conçue de telle sorte à présenter un plan de symétrie (14), qui est disposé pour l'essentiel perpendiculairement à la direction d'émission ou de réception des signaux de mesure ultrasonores, et par rapport auquel l'unité apte à vibrer (16) est disposée de façon symétrique, et
**en ce qu'**au moins une zone partielle de la surface extérieure (14) de l'unité apte à vibrer est reliée avec le boîtier (12) dans la zone du plan de symétrie (14) de l'unité apte à vibrer (16), une membrane annulaire (15) étant prévue dans la zone du plan de symétrie (14) de l'unité apte à vibrer, membrane par l'intermédiaire de laquelle l'unité apte à vibrer (16) est reliée avec le boîtier (12).

2. Dispositif selon la revendication 1,
**caractérisé**
**en ce que** l'unité apte à vibrer (16) comporte au moins un élément piézoélectrique (9, 10) en forme de disque, un élément supérieur (17) et un élément inférieur (18), en ce que l'élément piézoélectrique / les éléments piézoélectriques (9, 10) est/sont disposé(s) symétriquement par rapport au plan de symétrie (14), et
**en ce que** l'élément supérieur (17) et l'élément inférieur (18) sont disposés symétriquement par rapport aux deux côtés de l'élément piézoélectrique / des éléments piézoélectriques (9, 10).

3. Dispositif selon la revendication 2,
**caractérisé**
**en ce que** l'élément piézoélectrique (9, 10) présente une première surface de délimitation (19) et une deuxième surface de délimitation (20),
**en ce qu'**est prévu l'élément inférieur (15) parallèlement à la première surface de délimitation (19) et
**en ce qu'**est prévu l'élément supérieur (14) parallèlement à la deuxième surface de délimitation (20).

4. Dispositif selon la revendication 3,
**caractérisé**
**en ce que** sont prévues, dans une zone prédéfinie des deux surfaces de délimitation (19, 20) de l'élément piézoélectrique (9, 10), des électrodes (21, 22) par l'intermédiaire desquelles l'élément piézoélectrique (9, 10) ou l'unité apte à vibrer (13, 9, 10) sont excités en vibrations.

5. Dispositif selon la revendication 2,
**caractérisé**
**en ce qu'**est prévue, entre l'électrode (21) sur la première surface de délimitation (19) et l'élément inférieur (18) et l'électrode (22) sur la deuxième surface de délimitation (20) et l'élément supérieur (17), respectivement une couche isolante diélectrique (24, 25).

6. Dispositif selon l'une des revendications 2 à 5,
**caractérisé**
**en ce qu'**est prévue, dans une zone marginale de l'unité apte à vibrer (16), une cavité (23) annulaire afin de compenser les vibrations radiales apparaissant éventuellement sur l'unité apte à vibrer.

7. Dispositif selon la revendication 2, 3 ou 5,
**caractérisé**
**en ce qu'**est disposée une masse de scellement (27) dans la chambre (26), qui se situe au-dessus de l'élément supérieur (17).

8. Dispositif selon la revendication 7,
**caractérisé**
**en ce que**, concernant la masse de scellement (27), il s'agit d'une masse de silicone.

9. Dispositif selon la revendication 1,
**caractérisé**
**en ce que** l'élément supérieur (17) est interchangeable, et
**en ce que** sont prévus des éléments supérieurs (17) d'épaisseurs différentes et/ou de densités différentes, qui peuvent être choisis en fonction du produit mesuré (4) respectif et intégrés dans l'unité apte à vibrer (16).

10. Dispositif selon la revendication 1,
**caractérisé**
**en ce que** sont prévus des produits de remplissage (28) interchangeables de densités différentes, qui peuvent être disposés dans la chambre (26) au-dessus de l'élément supérieur (17) en fonction du produit mesuré (4) respectif.
